# EUROPEAN PATENT APPLICATION

(11) **EP 2 876 336 A1**
(43) Date of publication of application: **27.05.2015**
(21) Application number: 14194005.6
(22) Date of filing: 20.11.2014
(51) Int. Cl.: F16J 15/32, B25B 27/00

(54) **Cartridge seal for an appliance and method of using and manufacturing**

(30) Priority: 22.11.2013 US 201314088092
(71) Applicant: Trostel, Ltd., Milwaukee, WI 53227 (US)
(72) Inventor: Stoeck, Paul J., Lake Geneva, WI Wisconsin 53147 (US); Wangsness, Terry R., Jefferson, WI Wisconsin 53549 (US)
(74) Representative: UEXKÜLL & STOLBERG

(57) **Abstract**

A cartridge seal assembly (30) can be used for sealing an annular space between a rotating shaft and an opening in a housing of an appliance. The cartridge seal assembly (30) includes a wear sleeve (36) and an elastomeric seal (32). The wear sleeve (36) includes a cylindrical wall (40) sized to fit the rotary shaft and an radially outwardly extending flange (42), the flange comprising a peripheral edge. The elastomeric seal (32) includes a primary seal (50) configured to form a static seal against the cylindrical wall (40) of the wear sleeve (36), an outer body (54) configured to engage a surface of the housing defining the opening, and a retaining feature (56) configured to engage the peripheral edge of the wear sleeve (36). The wear sleeve (36) is preassembled with the elastomeric seal (32).

## Description

### FIELD OF THE INVENTION

The present specification relates to seal assemblies. More particularly, the present specification relates to a seal assembly for sealing a rotatable shaft for an appliance such as a washing machine.

### BACKGROUND OF THE INVENTION

Various seal constructions are known for sealing about a rotatable shaft. Such seal assemblies are provided between the rotating shaft and a stationary component such as a frame member or housing. The seal assembly generally includes an elastomeric sealing member with a sealing lip that forms a seal against the outer surface of the shaft or against a body coupled to the shaft. The lip may engage the outer surface of the shaft with a preload force. It is necessary to control the preloading force to ensure that a sufficient amount of force is exerted by the sealing lip of the seal to provide proper functioning, and to also ensure that the preloading force does not exceed that which could cause failure of the seal.

Conventionally, components of a seal assembly for an appliance such as a washing machine is assembled on the assembly line. The different components may be installed by different manufacturers and/or different installers. Lubricants such as grease are deposited on the assembly line. For example, a wear ring may be installed onto the rotating shaft by the manufacturer of the shaft or at a first station on the assembly line, grease may be applied to the sealing member at a second station of the assembly line, and the sealing member may be installed and aligned with the wear ring at a third station of the assembly line. While established standards increase the likelihood that the different components can be assembled to form a proper functioning seal, such an approach requires several people or stations to apply grease, assemble or install separate components, maintain cleanliness, maintain proper alignment between components, and maintain proper part orientations between components.

### SUMMARY OF THE INVENTION

One embodiment relates to a cartridge seal assembly for sealing an annular space between a rotating shaft and an opening in a housing of an appliance. The cartridge seal assembly includes a wear sleeve and an elastomeric seal. The wear sleeve includes a cylindrical wall sized to fit the rotary shaft and a radially outwardly extending flange comprising a peripheral edge. The elastomeric seal includes a primary seal configured to form a static seal against the cylindrical wall of the wear sleeve, an outer body configured to engage a surface of the housing defining the opening, and a retaining feature configured to engage the peripheral edge of the wear sleeve. The wear sleeve is preassembled with the elastomeric seal.

Another embodiment relates to a method of assembling a cartridge-type radial shaft seal assembly. The method includes providing a seal member comprising a retaining feature and a cavity configured to receive a lubricant. The method also includes mounting the seal member to a lubricant dispenser such that the cavity is aligned with a plurality of apertures formed in a central body of the lubricant dispenser, and dispensing a lubricant through the plurality of apertures into the cavity. The method further includes mounting a wear sleeve to the lubricant dispenser, the wear sleeve comprising a cylindrical portion and a radially outwardly extending flange. The method further includes moving the seal member towards the wear sleeve such that retaining feature engages the radially outwardly extending flange to couple the seal member to the wear sleeve and the cylindrical portion traps the lubricant in the cavity and removing the seal member and wear sleeve from the lubricant dispenser.

Another embodiment relates to a method of installing a cartridge-type radial shaft seal on a rotary shaft of an appliance. The method includes providing a shaft seal with a wear sleeve defining a cylindrical inner surface and an outwardly extending flange defining a peripheral edge and an elastomeric seal rotatable relative to the wear sleeve and including an outer engagement surface and a retaining feature configured to engage the peripheral edge of the wear sleeve. The method further includes engaging the shaft seal with an installation member. The installation member is configured to simultaneously contact a surface of the wear sleeve and a surface of the elastomeric seal. The method further includes coupling the inner surface of the wear sleeve to the rotary shaft with a press fit by exerting a force to the shaft seal with the installation member in a direction parallel to the axis of the rotary shaft, inserting the rotary shaft and the shaft seal into an opening of a housing, the opening defined by an inner surface, and engaging the inner surface of the housing with the outer engagement surface of the elastomeric seal.

It is to be understood that both the foregoing general description and the following detailed description are exemplary and explanatory only, and are not restrictive of the invention as claimed.

### BRIEF DESCRIPTION OF THE DRAWINGS

Features, aspects, and advantages of the present invention will become apparent from the following description, appended claims, and the accompanying exemplary embodiments shown in the drawings, which are briefly described below and wherein like references denote like elements.
FIG. 1 is a partial sectional view schematic drawing of a washing machine, including a seal assembly disposed between a rotating shaft and a tub housing, in accordance with an exemplary embodiment.
FIG. 2 is a more detailed cross sectional view of the seal assembly illustrated in FIG. 1, in accordance with an exemplary embodiment, the seal assembly including a seal and a wear sleeve.
FIG. 3a is an exploded cross sectional view schematic drawing of a fixture for assembling the seal assembly illustrated in FIG. 2, in accordance with an exemplary embodiment.
FIG. 3b is a cross sectional view schematic drawing of the fixture illustrated in FIG. 3a with a seal and a wear sleeve slid onto the fixture.
FIG. 3c is a cross sectional view schematic drawing of the fixture illustrated in FIG. 3a with a lubricant deposited onto the seal.
FIG. 3d is schematic cross sectional view schematic drawing of the fixture illustrated in FIG. 3a with the seal coupled to the wear sleeve.
FIG. 4a is a schematic exploded perspective view schematic drawing showing the seal assembly illustrated in FIG. 2 being mounted to the rotary shaft illustrated in FIG. 1, in accordance with an exemplary embodiment.
FIG. 4b is a schematic cross sectional view schematic drawing of the seal assembly illustrated in Fig. 2 slid onto the rotary shaft using an installation member.
FIG. 4c is a schematic cross sectional view schematic drawing of the rotary shaft and the seal assembly illustrated in Fig. 2 being inserted into an opening in a tub of a washing machine.
FIG. 5 is a flowchart of a method for assembling a cartridge-type radial shaft seal assembly, in accordance with an exemplary embodiment.
FIG. 6 is a flowchart of a method for installing a cartridge-type radial shaft seal on a rotary shaft of an appliance, in accordance with an exemplary embodiment.

### DETAILED DESCRIPTION OF THE PREFERRED EMBODIMENTS

An advantageous seal design according to one embodiment includes a combination of features that reduce complications associated with the manufacture and use of seals. The seal design can be a radial shaft seal assembly or cartridge seal assembly in one embodiment.

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," "inner," "outer," etc.) are merely used to describe the orientation of various elements in the FIGURES. It should be noted that the orientation of various elements may differ according to other exemplary embodiments, and that such variations are intended to be encompassed by the present disclosure. "Air side" and "oil side" are used to reference the sides of the seal, as is known in the art, with the "oil side" confronting the sealed portion of the seal and the "air side" confronting the open portion of the seal.

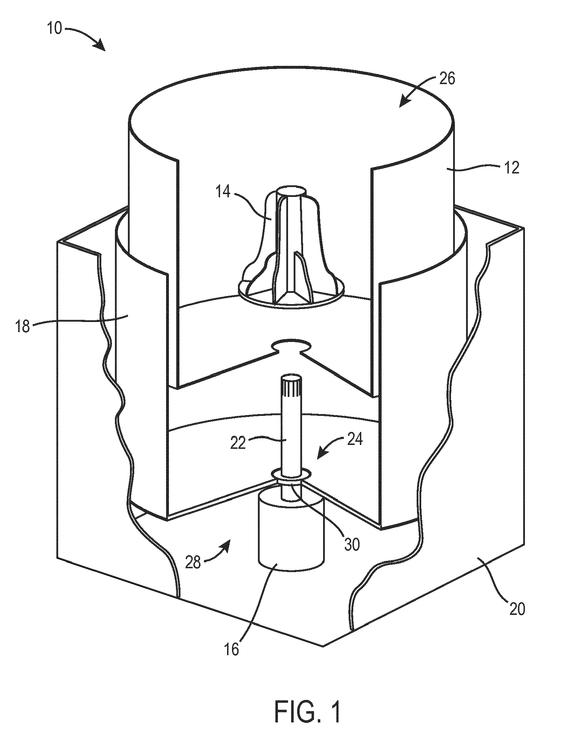

Referring to FIG. 1, an appliance, shown as a washing machine 10 is shown according to an exemplary embodiment. The washing machine 10 includes a rotary element, shown as a cylindrical basket 12 and an agitator 14 that are driven by a motor 16. The basket 12 and/or the agitator 14 are rotated by the motor 14 relative to a stationary element, shown as a generally cylindrical housing or tub 18, in which the basket 12 and the agitator 14 are provided. The motor 16 and the tub 18 may be positioned within an outer housing 20 in one embodiment.

The motor 16 is coupled to the basket 12 and the agitator 14 via a shaft 22 (e.g., output shaft, drive shaft, rotary shaft, etc.) that may be rotated in one direction or may be rotated in both directions (e.g., clockwise and counterclockwise) in one embodiment. The motor 16 is provided on the opposite side of the tub 18 relative to the basket 12 and the agitator 14 and the shaft 22 extends from the motor 16 through an opening 24 (e.g., aperture, hole, bore, etc.) in the tub 18 in one embodiment. According to an exemplary embodiment, the tub 18 is configured to contain water, along with various chemicals (e.g., detergents, bleach, etc.) associated with washing clothes. A cartridge-type seal assembly 30 (e.g., rotary shaft seal, radial shaft seal, lip seal, etc.) according to one embodiment is provided in the opening 24 between the rotating shaft 22 and the stationary tub 18 to prevent the egress of liquids from the interior 26 of the tub 18 to the exterior 28 of the tub 18 through the opening 24. The washing machine 10 is exemplary only and seal assembly 30 can be used in various applications and environments.

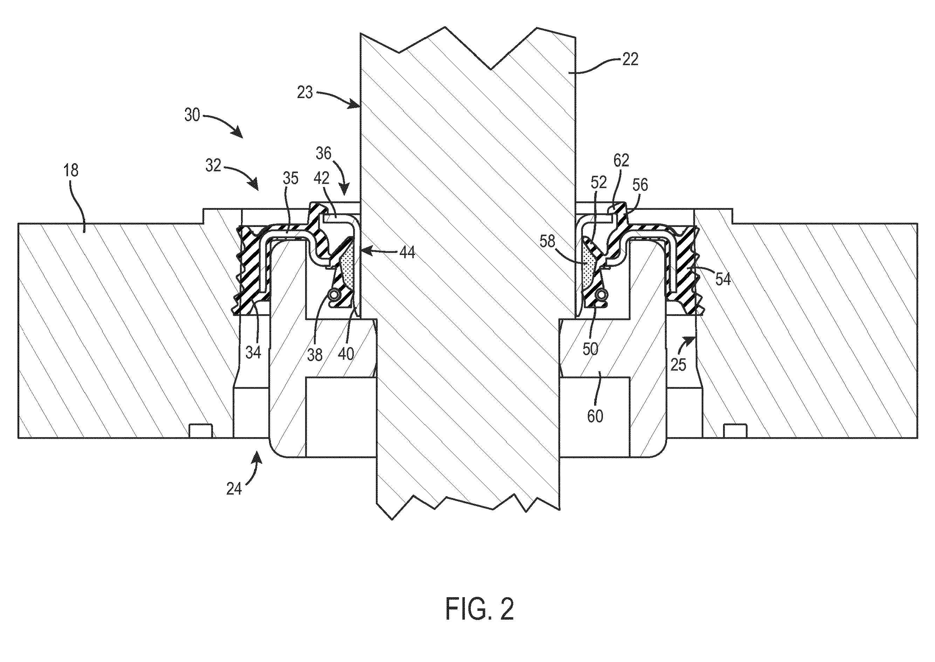

Referring to FIG. 2, an exemplary embodiment of the seal assembly 30 is shown in more detail. The seal assembly 30 includes a seal 32 formed by a resilient member 34 (e.g., seal element, rubber portion, etc.) coupled to a rigid member 35 (e.g., insert, metal portion, seal case, etc.). The seal assembly 30 can also include a wear sleeve 36 and a biasing member, shown as a garter spring 38, in one embodiment. A wear sleeve 36 is in contact with the resilient member 34. In one embodiment, when the seal assembly 30 is installed in the washing machine 10, the shaft 22 is fixed to the sleeve 36, and the sleeve 36 is sealed against the outer surface 23 of the shaft 22. The resilient member 34 forms the sealing interface against the wear sleeve 36. The garter spring 38 may be provided to assist the formation of the sealing interface between the resilient member 34 and the wear sleeve 36.

The wear sleeve 36 includes a cylindrical first portion 40 that is configured to slide over the shaft 22 and a second portion 42 (e.g., flange) that extends outward from one end of the first portion 40 away from the outer surface 23 of the shaft 22 in one embodiment. The wear sleeve 36 is a rigid body with a diameter that is slightly less than the diameter of the portion of the shaft 22 disposed in the opening 24 in the tub 18. The wear sleeve 36 is slid onto the shaft 22 with an inner surface 44 of the wear sleeve confronting the outer surface 23 of the shaft 22. According to an exemplary embodiment, the wear sleeve 36 is coupled to the shaft 22 with a press fit (e.g., interference fit). Friction at the sealing interface causes heating of the seal 32 and the wear sleeve 36. The direct metal-to-metal contact between the wear sleeve 36 and the shaft 22 allows heat to transfer from the wear sleeve 36 and shaft 22 and away from the seal 32 in one embodiment. The wear sleeve 36 is formed from a material that is resistant to corroding in the presence of the liquids contained within the tub 18 in one embodiment. According to an exemplary embodiment, the wear sleeve is formed from a chromium steel alloy (e.g., stainless steel).

The resilient member 34 includes a first or primary seal 50, a second or exclusion seal 52, an outer body 54 configured to engage a surface 25 defining the opening 24, and a retaining feature 56 in one embodiment. The primary seal 50 and the exclusion seal 52 are radially inwardly extending lips in one embodiment. The specific geometry of the seals 50 and 52 may vary depending on the desired performance characteristics of the seal assembly 30 and the geometry of the surrounding components (e.g., the shaft 22, the opening 24, etc.). The primary seal 50 maintains a leak-free fit between the seal assembly 30 and an outer surface 46 of the first portion 40 of the wear sleeve 36 in one embodiment. The primary seal 50 may be biased against the outer surface 46 with the garter spring 38, which is received in an outwardly-facing groove formed in the primary seal 50 opposite the sealing interface in one embodiment. The diameter of the wear sleeve 36 in relation to the inner diameter of the resilient member 34 results in a predetermined preload force being applied to the primary seal 50 in one embodiment.

The exclusion seal 52 is configured to maintain a secondary seal to reduce the exposure of the primary seal 50 to abrasive contaminants (e.g., sand, dust, dirt, mud, etc.) that may be present in the tub 18 (e.g., suspended in the liquid contained in the tub 18). Reducing the exposure of the primary seal 50 to these contaminants can reduce the wear on the primary seal 50 and the likelihood of premature failure of the primary seal 50 due to wear. The exclusion seal 52 contacts the outer surface 46 above the primary seal 50. A lubricant (e.g., grease) may be provided in the annular cavity 58 defined between the primary seal 50, the wear sleeve 36, and the exclusion seal 52. The seal assembly 30 may further include an absorbent material (e.g., a cellular material) to trap additional contaminants.

The outer body 54 includes features, shown as ridges, that engage and cooperate with the surface 25 to maintain the proper positioning of the seal assembly 30 in the opening 24 and against the shaft 22 in one embodiment. Alternatively, lips r other sealing features can be utilized.

The resilient member 34 is formed of a pliable material such as an elastomer or thermoplastic material that is configured to withstand the heat and chemical environment of the washing machine 10. The resilient member 34 may be formed, in certain embodiments from silicone, fluorocarbon rubber (FKM), alkyl acrylate copolymer (ACM), nitrile butadiene rubber (NBR), hydrogenated nitrile butadiene rubber (HNBR), or ethylene acrylate (AEM).

The geometry of the resilient member 34 between the outer body 54 and the inner portion including the primary seal 50 and the exclusion seal 52 may be varied to accommodate other components, such as a drive housing 60. The rigid member 35 reinforce the resilient member 34 and adds rigidity to the interior portion of the seal assembly 30 and reduces the likelihood that the static seal between the primary seal 50 and the outer surface 23 of the shaft 22 will be lost due to swelling or centrifugal forces stretching the resilient member 34 in one embodiment. In one embodiment, the rigid member 35 has an up-side J-shaped cross sectional area with a flange portion proximate exclusion seal 52. The flange portion of member 35 supports exclusion seal 52 in one embodiment. The rigid member 35 is formed of a metal (e.g., a carbon steel alloy, an aluminum alloy, etc.) or any other material that provides sufficient rigidity to the seal assembly 30 (e.g., a metal composite material, a non-metal composite material, etc.) in one embodiment. According to an exemplary embodiment, the resilient member 34 is bonded to the rigid member 35 through an overmolding process. In other exemplary embodiments, the resilient member 34 and the rigid member 35 may be coupled together with another appropriate method, such as with an adhesive.

The retaining feature 56 includes a radial lip 62 extending inward from a upwardly extending cylindrical wall 64 in one embodiment. The top of the axial-facing lip 62 is a beveled lead-in surface and the axial-facing lip 62 has an inner diameter that is less than the outer diameter of the wear sleeve 36 in one embodiment. The wear sleeve 36 may be coupled to the seal 32 by pressing the wear sleeve 36 downward into the center of the seal 32. The contact between the second portion 42 of the wear sleeve 36 and the axial-facing lip 62 forces the wall 64 to flex outward until the second portion 42 passes the axial-facing lip 62. The retaining feature 56 then returns to the rest position shown in FIG. 2 in which the axial-facing lip 62 engages the outer periphery of the second portion 42 of the wear sleeve 36 to retain the wear sleeve 36 to the seal 32 in one embodiment. In one embodiment, the retaining feature 56 is not integral with the resilient member 34 and can be a separate resilient (e.g., an elastomer) hook bonded to a rigid (e.g., metal) member assembled as part of seal 32. The rigid member can be pressed onto or over the resilient member 34 in one embodiment.

The retaining feature 56 and the wear sleeve 36 further form an additional labyrinth seal to minimize the exposure of the primary seal 50 to abrasive contaminants that may be present in the tub 18 in one embodiment.

Because the seal assembly 30 is a preassembled cartridge-type seal in one embodiment, the alignment and integrity of the seal can be controlled by the manufacturer of the seal assembly 30 and is not dependent multiple manufacturers and/or installers aligning components of the seal (e.g., aligning a seal with a separate wear sleeve that is provided on the rotary shaft) when assembling the washing machine 10 in one embodiment. Further, the seal assembly 30 can be lubricated by the manufacturer and does not require an installer to apply grease or another lubricant when assembling the washing machine 10 in one embodiment. The primary seal 50, the retaining feature 56 and the labyrinth seal formed between the seal 32 and the wear sleeve 36 retains the lubricant inside the seal assembly 30 and substantially prevents the contamination of the lubricant during shipping and handling of the seal assembly 30 in one embodiment.

The seal assembly 30 is preassembled using a fixture that applies a predetermined preload to the seal 32 and deposits a lubricant onto the seal 32 in one embodiment. Using the fixture, the wear sleeve 36 is coupled to the seal 32 with a snap fit. A biasing member may then be coupled to the seal 32, such as by snapping the garter spring 38 onto the primary seal 50.

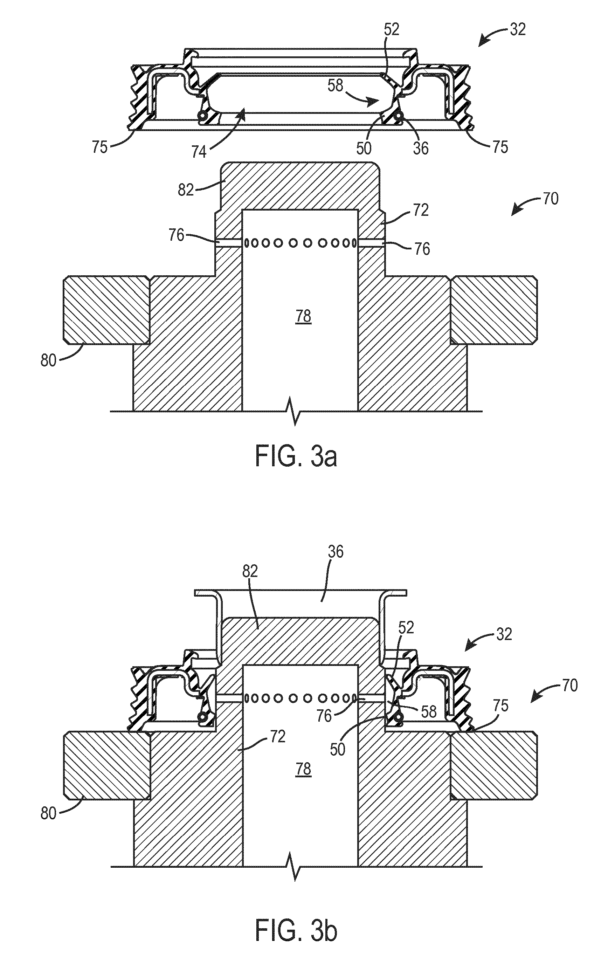

Referring now to FIGS. 3a-d, a fixture for assembling the seal assembly 30 is shown according to an exemplary embodiment as a lubricant dispenser 70 (e.g., grease head). The lubricant dispenser 70 includes a cylindrical central body 72 onto which the seal 32 is fitted. As shown in FIG. 3a, the seal 32 is an annular member with a central opening 74 defined by the inner edges of the primary seal 50 and the exclusion seal 52. The central opening 74 has a diameter that is less than the outer diameter of the central body 72 of the lubricant dispenser 70. A biasing member may be provided, such as by snapping the garter spring 38 into a groove on the outside surface of the primary seal 50.

As shown in FIG. 3b, as the seal 32 is mounted onto the central body 72, the seal 32 is forced outward, applying a predetermined preload on the primary seal 50 and the exclusion seal 52. The seal 32 is slid onto the central body until the cavity 58 between the primary seal 50 and the exclusion seal 52 is aligned with apertures 76 formed in a central body 72 of the lubricant dispenser 70. The lubricant dispenser 70 may include a physical stop to easily position the seal 32 relative to the apertures 76 in one embodiment. According to an exemplary embodiment, the seal 32 is slid along the central body 72 until the peripheral edge 75 of the seal 32 contacts the surface of an annular plate 80 that is moveable relative to the central body 72. In this position, the cavity 58 is aligned with apertures 76 in one embodiment.

The wear sleeve 36 is coupled to the central body 72 above the seal 32. According to an exemplary embodiment, the central body 72 includes a neck portion 82 with a diameter that is less than the diameter of the rest of the central body 72 (e.g., the portion of the central body 72 proximate the apertures 76. The cylindrical first portion 40 of the wear sleeve 36 is slid onto the neck portion 82. According to an exemplary embodiment, the outer diameter of the first portion 40 is approximately equal to the outer diameter of the central body 72. The wear sleeve 36 therefore forms a relatively smooth, unbroken cylindrical surface with the central body 72 in one embodiment.

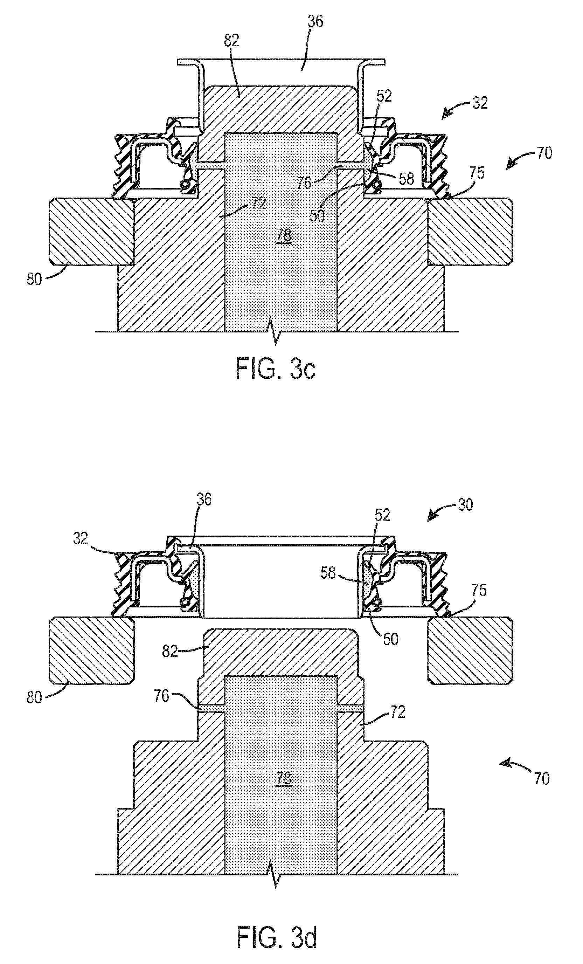

As shown in FIG. 3c, the lubricant is dispensed through apertures 76 into the cavity 58. According to an exemplary embodiment, the apertures 76 are holes formed in the central body 72 that extend from the outer surface to an interior chamber 78 (e.g., reservoir, manifold, etc.) formed in the lubricant dispenser 70. The lubricant in the chamber 78 is pressurized in a controlled manner to force it out of the chamber 78 and into the cavity 58 through the apertures 76. Because the apertures are spaced about the circumference of the central body 72, the entire cavity 58 may be filled with lubricant simultaneously, without having to reposition (e.g., rotate) the seal 32 relative to the lubricant dispenser 70.

As shown in FIG. 3d, once the lubricant has been dispensed, the seal 32 is moved relative to the lubricant dispenser 70 by moving the plate 80 upward. The seal 32 is slid upward towards the wear sleeve 36. The primary seal 50 and the exclusion seal 52 transition smoothly between contacting the outer surface of the central body 72 and contacting the outer surface of the first portion 40 of the wear sleeve 36, maintaining the preload on the primary seal 50 and the exclusion seal 52 and retaining the lubricant in the cavity 58. The seal 32 is moved upward until the retaining feature 56 engages the second portion 42 of the wear sleeve 36 to couple the seal member 32 to the wear sleeve 36. Once coupled together, the seal member 32 and the wear sleeve 36 may be removed from the lubricant dispenser 70.

The seal assembly 30 including the seal 32, the wear sleeve 36 and the garter spring 38 are provided to the end user as a complete cartridge-type seal device in one embodiment. The seal assembly 30 includes all the components properly installed and oriented relative to each other and ready for installation onto a rotary shaft in one embodiment. The seal assembly 30 may be handled, stored, and shipped with minimizing the exposure of contamination of or damage to the primary seal 50 in one embodiment.

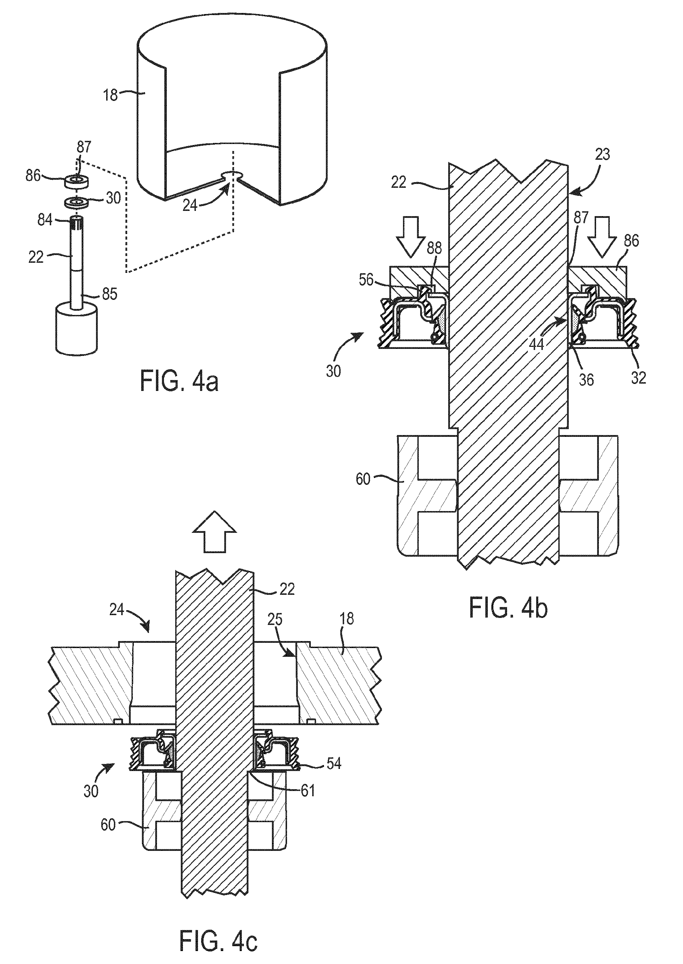

Referring now to FIGS 4a-c, the seal assembly 30 is shown being installed into the washing machine 10 according to an exemplary embodiment. The seal assembly 30 may be installed, for example, by an installer on an assembly line according to one embodiment. The seal assembly 30 is provided to the end user fully assembled and lubricated as described above according to one embodiment. Lubrication of the seal assembly 30 and assembly of the seal assembly 30 by the end user is therefore eliminated in one embodiment. It can be appreciated that such a cartridge-type seal assembly 30 can save time, labor, and potential for contamination or misassembly by reducing multiple operations and people in one embodiment.

The seal assembly 30 is installed with the aid of an installation fixture 86 as shown in FIG. 4a according to one embodiment. The seal assembly 30 is placed on a first end 84 of the shaft 22. The installation member 86 is fitted to the top of the seal assembly 30 in one embodiment. The installation member 86 has a central opening 87 through which the shaft 22 may pass in one embodiment. The end face of the installation member 86 is contoured to match the upper surfaces of the seal assembly 30 (e.g., the seal 32 and the wear sleeve 36) and includes a groove 88 (see FIG. 4b) that is configured to receive the retaining feature 56. In addition, member 86 can have a peripheral ridge corresponding to the peripheral shape of resilient member 35 in one embodiment.

As shown in FIG. 4b, the installation member 86 is forced downward, pushing the seal assembly 30 in a direction parallel to the axis of the shaft 22 and away from the first end 84 of the shaft 22. According to an exemplary embodiment, the shaft 22 is slightly tapered with a diameter that increases from the first end 84 to an opposite second end 85. The seal assembly 30 is pushed along the length of the shaft 22 until the inner surface 44 of the wear sleeve 36 is coupled to the outer surface 23 of the shaft 22 with a watertight press fit. Because the installation member 86 is contoured to match the seal assembly 30, the installation member 86 exerts an even force on both the seal 32 and the wear sleeve 36, maintaining the alignment between the seal 32 and the wear sleeve 36 as it moves along the length of shaft 22 and engages the shaft 22 with a press fit in one embodiment. Simultaneously the seal assembly 30 may be inserted into the drive housing 60 in one embodiment. The force applied to the installation member 86 can be applied by a mechanical device such as a pneumatic or hydraulic press.

As shown in FIG. 4c, the shaft 22 and seal assembly 30 are then mounted to the tub 18 by inserting the first end 84 of the shaft 22 from the bottom of the tub 18 through the opening 24 in the tub 18 in one embodiment. According to an exemplary embodiment, the opening 24 is tapered with a diameter that increases from top to bottom. The ridged surface of the outer body 54 of the seal assembly 30 is therefore forced against the surface 25 defining the opening 24 as the shaft 22 and the seal assembly 30 are pushed upward through the opening 24. The outer body 54 engages and cooperates with the surface 25 to maintain the proper positioning of the seal assembly 30 in the opening 24 and against the shaft 22. The drive housing 60 is fixed to the tub 18, such as with mechanical fasteners (e.g., bolts). The shaft 22 is fixed relative to the tub 18 in a direction parallel to the axis of the shaft 22 through the contact between drive housing 60 and a shoulder 61 of the shaft 22.

By providing the seal 32, the wear sleeve 36 and the garter spring 38 as a preassembled seal assembly 30, the seal assembly 30 may be installed onto the shaft 22, and the shaft 22 and seal assembly 30 may be mounted to the tub 18 of a washing machine 10 by a single operator with a press and an installation fixture in one embodiment. The burden of ensuring all components of the seal assembly 30 are properly aligned and coupled together is shifted from the end user to the manufacturer of the seal assembly 30 in one embodiment. Further, the use of the seal assembly 30 can improve the assembly process by reducing part inventory, tracking, handling, and purchasing of multiple components in one embodiment.

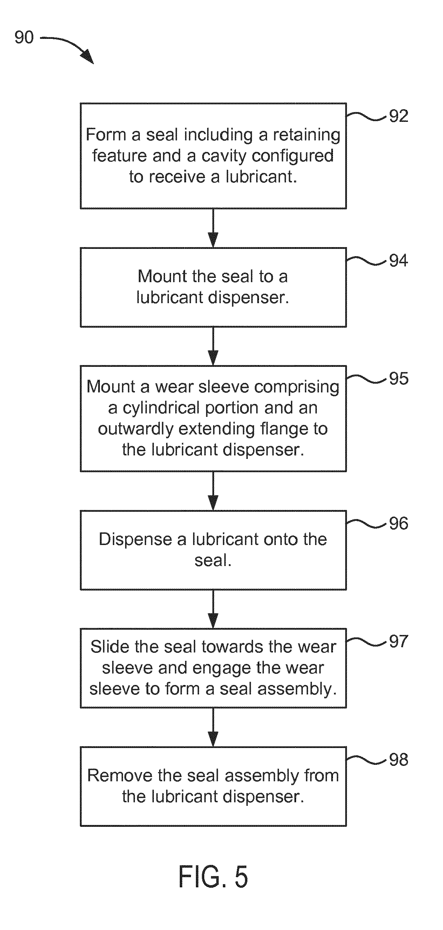

Referring now to FIG. 5, a method 90 for assembling a cartridge-type radial shaft seal assembly, such as the seal assembly 30 described above, is shown according to an exemplary embodiment. A seal member including a retaining feature and a cavity configured to receive a lubricant (e.g., the seal 32) is provided (step 92). The seal member is mounted to a lubricant dispenser (e.g., the lubricant dispenser 70) such that the cavity is aligned with a plurality of apertures formed in a central body of the lubricant dispenser (step 94). A wear sleeve including a cylindrical portion and an radially outwardly extending flange (e.g., the wear sleeve 36) is mounted to the lubricant dispenser (step 95). A semi-solid lubricant is dispensed through the plurality of apertures into the cavity (step 96). The seal member is moved towards the wear sleeve such that retaining feature engages the radially outwardly extending flange to couple the seal member to the wear sleeve and the cylindrical portion traps the lubricant in the cavity (step 97). The coupled seal member and wear sleeve are then removed from the lubricant dispenser (step 98).

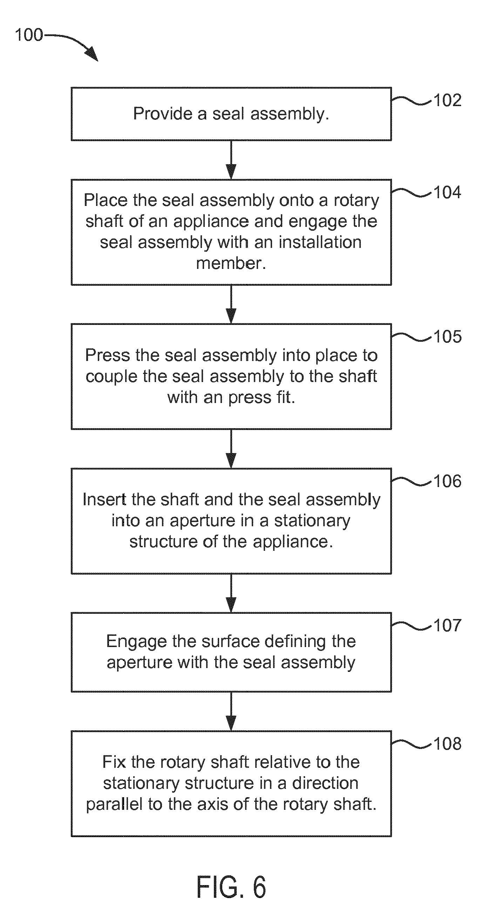

Referring now to FIG. 6, a method 100 of installing a cartridge-type radial shaft seal on a rotary shaft (e.g., the shaft 22) of an appliance (e.g., the washing machine 10) is shown according to an exemplary embodiment. A shaft seal (e.g., the seal assembly 30) is provided , the seal including a wear sleeve defining a cylindrical inner surface and an outwardly extending flange defining a peripheral edge; and an elastomeric seal rotatable relative to the wear sleeve and comprising an outer engagement surface and a retaining feature configured to engage the peripheral edge of the wear sleeve (step 102). An installation member is engaged with the shaft seal (step 104). The installation member is configured to simultaneously contact a surface of the wear sleeve and a surface of the elastomeric seal. The inner surface of the wear sleeve is coupled to the rotary shaft with a press fit by exerting a force to the shaft seal with the installation member in a direction parallel to the axis of the rotary shaft (step 105). The rotary shaft and the shaft seal are inserted into an opening of a housing or other stationary structure (e.g., the tub 18) (step 106). The opening is defined by an inner surface. The inner surface of the housing is engaged with the outer engagement surface of the elastomeric seal to position the shaft seal and the shaft within the opening (step 107). The rotary shaft is then fixed relative to the housing in a direction parallel to the axis of the rotary shaft (step 108).

The construction and arrangement of the elements of the seal device as shown in the exemplary embodiments are illustrative only. Although only a few embodiments of the present disclosure have been described in detail, those skilled in the art who review this disclosure will readily appreciate that many modifications are possible (e.g., variations in sizes, dimensions, structures, shapes, materials, and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements. Some like components have been described in the present disclosure using the same reference numerals in different figures. This should not be construed as an implication that these components are identical in all embodiments; various modifications may be made in various different embodiments. It should be noted that the elements and/or assemblies of the enclosure may be constructed from any of a wide variety of materials that provide sufficient strength or durability, in any of a wide variety of colors, textures, and combinations.

## Claims

1. A cartridge seal assembly for sealing an annular space between a rotating shaft and an opening in a housing of an appliance, **characterized by**:
a wear sleeve, comprising:
a cylindrical wall sized to fit the rotary shaft; and
a radially outwardly extending flange, the flange comprising a peripheral edge; and
an elastomeric seal, comprising:
a primary seal configured to form a static seal against the cylindrical wall of the wear sleeve;
an outer body configured to engage a surface of the housing defining the opening; and
a retaining feature configured to engage the peripheral edge of the wear sleeve; and
wherein the wear sleeve is preassembled with the elastomeric seal.

2. The cartridge seal assembly of claim 1, further **characterized in that** the elastomeric seal comprises a resilient member and a rigid member bonded to the resilient member.

3. The cartridge seal assembly of claim 2, further **characterized in that** the retaining feature comprises an inwardly extending lip of the resilient member or is separate from the resilient member.

4. The cartridge seal assembly of claim 2, further **characterized in that** the elastomeric seal further comprises an exclusion seal.

5. The cartridge seal assembly of claim 4, further **characterized in that** the primary seal and the exclusion seal comprises radially inwardly extending lips.

6. The cartridge seal assembly of claim 5, further **characterized in that** the cylindrical wall of the wear sleeve has an outer diameter that is greater than the inner diameter of the primary seal and the exclusion seal.

7. The cartridge seal assembly of claim 6, further **characterized in that** the primary seal, the exclusion seal, and cylindrical wall of the wear sleeve define an annular cavity configured to receive a lubricant.

8. A method of installing the cartridge seal assembly of claim 1 on a rotary shaft of an appliance, the method **characterized by**:
engaging the cartridge seal assembly with an installation member, the installation member configured to simultaneously contact a surface of the wear sleeve and a surface of the elastomeric seal;
coupling the inner surface of the wear sleeve to the rotary shaft with a press fit by exerting a force to the shaft seal with the installation member in a direction parallel to the axis of the rotary shaft;
inserting the rotary shaft and the shaft seal into an opening of a housing, the opening defined by an inner surface; and
engaging the inner surface of the housing with the outer engagement surface of the elastomeric seal.

9. A method of assembling a cartridge-type radial shaft seal assembly, **characterized by**:
providing a seal member, the seal member comprising a retaining feature and a cavity configured to receive a lubricant;
mounting the seal member to a lubricant dispenser such that the cavity is aligned with a plurality of apertures formed in a central body of the lubricant dispenser;
dispensing a lubricant through the plurality of apertures into the cavity;
mounting a wear sleeve to the lubricant dispenser, the wear sleeve comprising a cylindrical portion and a radially outwardly extending flange;
moving the seal member towards the wear sleeve such that retaining feature engages the radially outwardly extending flange to couple the seal member to the wear sleeve and the cylindrical portion traps the lubricant in the cavity; and
removing the seal member and wear sleeve from the lubricant dispenser.

10. The method of claim 9, further **characterized in that** the cavity is an annular groove defined between a first radially inwardly extending lip and a second radially inwardly extending lips.

11. The method of claim 10, further **characterized by** coupling a biasing member to the seal member to the first radially inwardly extending lip, wherein the biasing member biases the first radially inwardly extending lip inward.

12. The method of claim 11, further **characterized in that** the inner diameter of the first radially inwardly extending lip and the second radially inwardly extending lip are less than the outer diameter of the central body of the lubricant dispenser, such that a predetermined preload is applied to the to the seal member by the lubricant dispenser.

13. The method of claim 12, further **characterized in that** the central body of the lubricant dispenser comprises a neck portion with a reduced diameter, the neck portion being configured to receive the wear sleeve.

14. The method of claim 13, further **characterized in that** the outer diameter of the cylindrical portion is approximately equal to the outer diameter of the central body such that the predetermined preload applied to the seal member is maintained as the seal member is moved to be coupled to the wear sleeve.

15. The method of claim 9, further **characterized in that** the lubricant is dispensed through the plurality of apertures from a single interior chamber formed in the lubricant dispenser.
